(19) Europäisches Patentamt

European Patent Office

Office européen des brevets

(11) **EP 1 726 930 A1**

(12) **EUROPÄISCHE PATENTANMELDUNG**

(43) Veröffentlichungstag:
**29.11.2006 Patentblatt 2006/48**

(51) Int Cl.:
*G01J 3/10* (2006.01)    *G01J 3/18* (2006.01)
*G01J 3/32* (2006.01)    *G01J 3/36* (2006.01)

(21) Anmeldenummer: **06006507.5**

(22) Anmeldetag: **29.03.2006**

(84) Benannte Vertragsstaaten:
**AT BE BG CH CY CZ DE DK EE ES FI FR GB GR HU IE IS IT LI LT LU LV MC NL PL PT RO SE SI SK TR**
Benannte Erstreckungsstaaten:
**AL BA HR MK YU**

(30) Priorität: **27.05.2005 DE 102005024271**

(71) Anmelder: **Carl-Zeiss Jena GmbH**
**07745 Jena (DE)**

(72) Erfinder:
• **Kerstan, Felix**
**07747 Jena (DE)**
• **Correns, Nico**
**99425 Weimar (DE)**

(54) **Gitterspektrometersystem und Verfahren zur Messwerterfassung**

(57)    Die vorliegende Erfindung betrifft ein Gitterspektrometersystem sowohl für polychromatische als auch für monochromatische Spektrometeranordnungen.

Das erfindungsgemäße Gitterspektrometersystem besteht dabei aus einer Lichtquelle zur Beleuchtung der zu untersuchenden Probe (6), einem Beugungsgitter (1), abbildenden optischen Elementen, einem in der Bildebene angeordneten Detektor und einer Steuer- und Regeleinheit (8). Als Lichtquelle werden Einzellichtquellen, vorzugsweise LEDs (7.1 bis 7.3) unterschiedlicher spektraler Charakteristik verwendet, deren Spektralbereich mehrere Beugungsordnungen in der Bildebene überstreichen. Von der Steuer- und Regeleinheit (8) werden nur die LEDs einzeln oder in Gruppen eingeschaltet, die in irgend einer Beugungsordnung nicht die selbe Stelle der in der Bildebene angeordneten Einzel-Detektoren (9.1, 9.2) beleuchten.

Die vorgeschlagene Lösung ist sowohl für polychromatische als auch für monochromatische Spektrometeranordnungen geeignet, wobei der Anwendungsbereich von der spektralen Empfindlichkeit des verwendeten Detektors bestimmt wird. Durch Ausnutzung mehrere Beugungsordnungen kann die Auflösung bei gleichbleibender Detektorgröße vergrößert bzw. die Detektorfläche bei gleicher Abbildungsqualität verkleinert werden.

Figur 2

**Beschreibung**

Die vorliegende Erfindung betrifft ein Gitterspektrometersystem sowohl für polychromatische als auch für monochromatische Spektrometeranordnungen mit mehr als einer Lichtquelle sowie ein Verfahren zur Erfassung und Auswertung der Messdaten.

Die im Stand der Technik bekannten Spektrometeranordnungen lassen sich in die zwei Gruppen Monochromatoren und Polychromatoren gliedern.

Monochromatoren kommen dabei mit nur einem Detektor aus, auf den der zu messende Spektralbereich nacheinander abgebildet und ausgewertet wird. Dadurch verlängert sich jedoch zwangsläufig die Zeit für die Messung, was sich insbesondere dann als nachteilig auswirkt, wenn sich die Probe während der Messzeit verändert, wie es in der Prozessmesstechnik und der Messung am lebenden Objekt die Regel ist.

Im Gegensatz dazu wird mit Polychromatoren der gesamte zu messende Spektralbereich auf einen Detektor mit mehreren einzelnen Abschnitten auf einmal abgebildet und kann daher gleichzeitig gemessen werden.

Eine derartige Anordnung, bestehend aus einem Diodenarray als Detektor, einem Konkavgitter und einem als Bikonvexlinse ausgebildeten transparenten Tragkörper, ist u. a. in der DE 40 38 638 A1 beschrieben.

Bei den polychromatischen Spektrometeranordnungen ist es erforderlich, dass die Probe entsprechend breitbandig beleuchtet wird. Falls dafür eine Lichtquelle nicht ausreicht, ist die Beleuchtung auch durch mehrere Lichtquellen möglich.

Dazu wird das Licht der unterschiedlichen Strahlungsquellen in den Strahlengang eingekoppelt. Während bei der Lösung gemäß WO 97/35178 A1 eine gleichzeitige Einkopplung des Lichtes vorgesehen ist, erfolgt dies bei den in DE 198 26 801 A1 und US 5,477,322 A beschriebenen Lösungen nacheinander. Das aufeinanderfolgende Einschalten der Lichtquellen hat den Vorteil der Streulichtreduktion und geringerer Belastung der einzelnen Lichtquellen. Allerdings verlängert sich dadurch die erforderliche Messzeit.

Im Stand der Technik sind weiterhin Polychromatoren bekannt, bei denen der gesamte abzubildende Spektralbereich in mehrere Beugungsordnungen zerlegt wird, wobei zur Trennung der Beugungsordnungen zusätzliche Bauelemente erforderlich sind.

Gemäß der Schriften US 2004/0257563 A1 und US 5,139,335 A können hierzu beispielsweise Bandpass-Filter verwendet werden, die dabei für jede der Beugungsordnungen vorzusehen sind.

Im Gegensatz dazu sieht das in der DE 35 16 183 A1 beschriebene System die Verwendung eines Prismas zur Trennung der Ordnungen vor.

Bei den genannten Lösungen des Standes der Technik wirkt sich nachteilig aus, dass zusätzliche optische Bauelemente zur Ordnungstrennung oder zur Kombination der Einzellichtquellen oder für beides erforderlich sind, um mit polychromatischen Spektrometeranordnungen das gesamte Spektrum gleichzeitig messen zu können. Weitere wesentliche Nachteile sind große Detektorflächen bei polychromatischen und lange Verfahrwege bei monochromatischen Messanordnungen. Dies ist besonders nachteilig, wenn für die Anwendung nur ein nichtzusammenhängender Teil des Gesamtspektrums benötigt wird, beispielsweise die Bereiche 530 bis 610 nm, 820 bis 850 nm und 940 bis 960 nm, das sind nur 130 nm der Gesamtbandbreite von 430nm, für die Detektorfläche bzw. Verfahrweg erforderlich sind.

Der vorliegenden Erfindung liegt die Aufgabe zugrunde die Nachteile der im Stand der Technik bekannten Lösungen zu beheben und eine Spektrometeranordnung zu entwickeln, bei der die Beleuchtung und der Detektor optimal aufeinander abgestimmt sind. Die möglichst kleine Spektrometeranordnung soll dabei einfach und kostengünstig zu fertigen sein.

Erfindungsgemäß wird die Aufgabe durch die Merkmale der unabhängigen Ansprüche gelöst. Bevorzugte Weiterbildungen und Ausgestaltungen sind Gegenstand der abhängigen Ansprüche.

Das vorgeschlagene Gitterspektrometersystem mit mehr als einer Lichtquelle und das Verfahren zur Messwerterfassung sind sowohl für polychromatische als auch für monochromatische Spektrometeranordnungen geeignet. Der Anwendungsbereich wird dabei von der spektralen Empfindlichkeit des verwendeten Detektors bestimmt.

Die Erfindung wird nachfolgend anhand eines Ausführungsbeispieles beschrieben. Dazu zeigen

Figur 1:     das erfindungsgemäße Gitterspektrometersystem als polychromatische Anordnung und

Figur 2:     das erfindungsgemäße Gitterspektrometersystem als monochromatische Anordnung.

Das erfindungsgemäße Gitterspektrometersystem besteht aus einer Lichtquelle zur Beleuchtung der zu untersuchenden Probe, einem Beugungsgitter, abbildenden optischen Elementen, einem in der Bildebene angeordneten Detektor und einer Steuer- und Regeleinheit. Die Lichtquelle besteht dabei aus mindestens zwei Einzellichtquellen unterschiedlicher spektraler Charakteristik, deren Spektralbereich mehrere Beugungsordnungen in der Bildebene überstreicht. Von der Steuer- und Regeleinheit werden nur die Einzellichtquellen einzeln oder in Gruppen eingeschaltet, die in irgend einer Beugungsordnung nicht die selbe Stelle des in der Bildebene angeordneten Detektors beleuchten.

Der Spektralbereich aller Einzellichtquellen umfasst hierbei mehrere (mindestens zwei) Beugungsordnungen, die auf dem in der Bildebene angeordneten Detektor abgebildet werden, wobei keine Mittel und Maßnahmen zur Trennung der Beugungsordnungen vorhanden sind.

Die eindeutige Zuordnung der gemessenen Lichtsignale zu einer Beugungsordnung erfolgt erfindungsgemäß dadurch, dass maximal eine der Lichtquellen eingeschaltet ist, die in irgend einer Beugungsordnung die selbe Stelle der Bildebene beleuchten.

Als abbildende optische Elemente können beispielsweise Spiegel, Linsen, Lichtleiter o. ä. verwendet werden. Es ist aber auch möglich ein abbildendes Beugungsgitter zu verwenden, welches die abbildenden und beugenden Eigenschaften in sich vereinigt.

Das erfindungsgemäße Gitterspektrometersystem kann in Abhängigkeit vom verwendeten Detektor sowohl als polychromatische als auch als monochromatische Spektrometeranordnung aufgebaut sein.

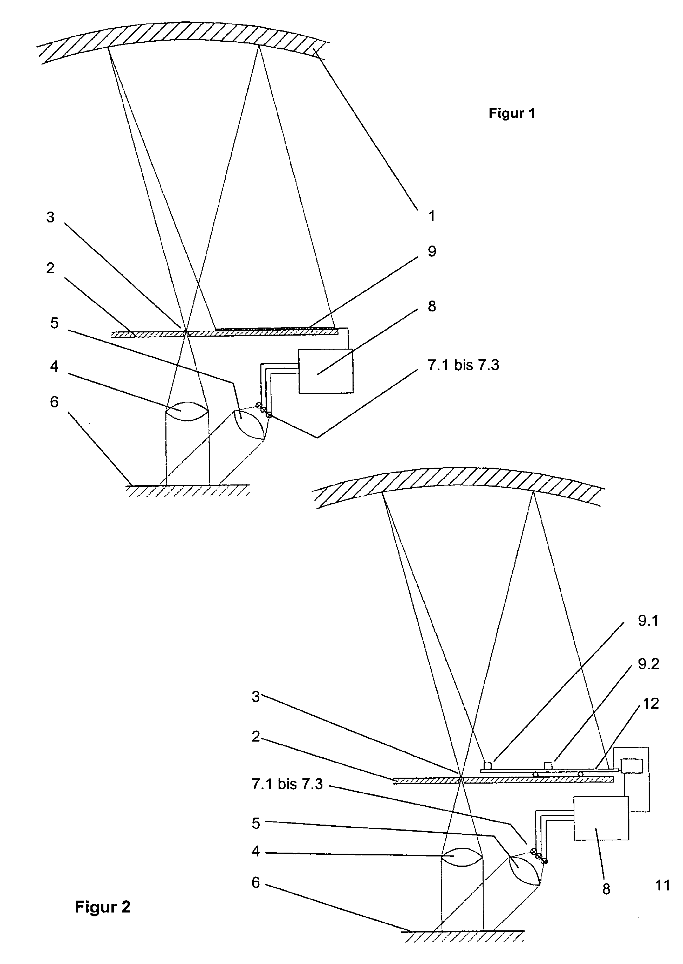

Zur Realisierung einer polychromatischen Spektrometeranordnung wird ein Detektor verwendet, der aus mehreren einzelnen Detektorabschnitten besteht. Der Detektor kann dabei als Zeilen- oder Matrixdetektor ausgebildet ist. In Figur 1 ist das erfindungsgemäße Gitterspektrometersystem als polychromatische Spektrometeranordnung dargestellt, mit den Proben in folgenden drei interessierenden Spektralbereichen untersucht werden sollen:

> 1. Bereich: 530 bis 610 nm
> 2. Bereich: 820 bis 850 nm
> 3. Bereich: 940 bis 960 nm

Die Lichtquelle besteht hierbei aus drei LED 7.1 bis 7.3 von denen die Probe unter einem Winkel von ca. 45° beleuchtet wird. Die Maxima der spektralen Lichtleistung liegen bei 570, 850 bzw. 940 nm. Die Halbwertsbreite der spektralen Lichtleistung beträgt jeweils 40 nm und die Zehntelwertsbreite ca. 80 nm, so dass die interessierenden drei Spektralbereiche bei Verwendung einer LED jeweils mit mindestens 1/10 der maximalen Lichtleistung ausgestrahlt werden. Es ist aber auch möglich mehrere LEDs zur Ausleuchtung eines interessierenden Spektralbereiches zu verwenden. So kann beispielsweise der 1. Bereich mit zwei LEDs, die ihre Maxima bei 550 und 590 nm haben ausgeleuchtet werden. Diese beiden LEDs werden von der Steuer- und Recheneinheit entsprechend gesteuert und gleichzeitig ein- und ausgeschaltet. Von der Steuer- und Recheneinheit werden der Strom durch die LEDs oder deren Einschaltdauer so gesteuert, das die Spektralbereiche etwa gleich hoch ausgesteuert werden.

Das von ein oder mehreren LEDs emittierte Licht wird mit Hilfe einer Fokussieroptik 5 auf die zu untersuchende Stelle der Probe 6 fokussiert, von dieser reflektiert und mit Hilfe der Abbildungsoptik 4 auf den Eingangsspalt 3 projiziert. Von dem im Gehäuse 2 befindlichen Eingangsspalt 3 wird das von der Probe 6 kommende Licht über das abbildende holographische Beugungsgitter 1 auf dem, in der Bildebene angeordneten Detektor abgebildet.

Bei der polychromatischen Spektrometeranordnung besteht der Detektor aus mehreren einzelnen Detektorabschnitten. Im vorliegenden Fall wurde eine Silizium-Photodioden-Zeile 9 (S8377-128Q von Hamamatsu) verwendet, die aus 128 einzelnen Detektorabschnitten (Pixeln) besteht. Es ist aber auch möglich einen Detektor mit zweidimensional aufgeteilten Detektorabschnitten (Matrixempfänger) zu verwenden. Hierbei werden die Signale der Pixel einer Spalte, auf die der selbe Spektralbereich abgebildet wird summiert.

Von der Steuer- und Recheneinheit 8 werden die Ausgangsströme der einzelnen Detektorabschnitte (Pixel) zur weiteren numerischen Berechnung vorzugsweise in digitale Zahlenwerte umgewandelt.

Das Gitterspektrometersystem hat einen Spektralbereich von 1590 bis 1920 nm in der 1. Beugungsordnung, 895 bis 960 nm in der 2. Beugungsordnung und 530 bis 640 nm in der 3. Beugungsordnung. Folglich liegt der 1. Bereich des interessierenden Spektralbereichen in der 3. Beugungsordnung und die beiden anderen Bereiche in der 2. Beugungsordnung. Die 1. Beugungsordnung braucht nicht weiter betrachtet zu werden, da die verwendete Silizium-Photodioden-Zeile 9 Spektren oberhalb von 1100 nm nicht messen kann.

In der vorliegenden vorteilhaften Ausgestaltungsvariante ist der spektrale Bereich (Produkt aus Beugungsordnung m und Wellenlänge $\lambda$) $m \cdot \lambda$ = 1590 bis 1920 nm auf 128 Pixel aufgeteilt. Ein Pixel entspricht dabei 2,6 nm in der 1. Beugungsordnung, 1,3 nm in der 2. Beugungsordnung und 0.9 nm in der 3. Beugungsordnung. Die geringere Auflösung im längerwelligen Teil des Spektrums ist kein wirklicher Nachteil, da auch beim Spektrometer nach dem Stand der Technik die Auflösung am langwelligen Ende wegen des größeren Abstandes zur optischen Achse geringer wird.

Zur Realisierung einer monochromatischen Spektrometeranordnung werden ein oder mehrere Einzel-Detektoren verwendet, die gleichzeitig in der Bildebene bewegt werden um das Spektrum abzufahren. **Figur 2** zeigt dazu ein als monochromatische Anordnung aufgebautes Gitterspektrometersystem, bei dem zwei, gleichzeitig in der Bildebene bewegte Einzel-Detektoren **9.1** und **9.2** verwendet werden. Der Abstand zwischen beiden Einzel-Detektoren entspricht dabei vorzugsweise der halben Länge der Bildebene. Auch mit der monochromatischen Spektrometeranordnung sollen Proben in den oben genannten drei interessierenden Spektralbereichen untersucht werden.

Wie bereits beschrieben wird auch hier die Probe von drei LED **7.1** bis **7.3** mit Hilfe einer Fokussieroptik **5** unter einem Winkel von ca. 45° beleuchtet und das von der Probe **6** reflektiert Licht mit Hilfe der Abbildungsoptik **4** auf den im Gehäuse **2** befindlichen Eingangsspalt **3** und weiter über das abbildende holographische Beugungsgitter **1** auf den, in der Bildebene angeordneten Detektor abgebildet. Dabei werden der Strom durch die LEDs **7.1** bis **7.3** oder deren Einschaltdauer so von der Steuer- und Recheneinheit **8** gesteuert, das die Spektralbereiche etwa gleich hoch ausgesteuert werden und so einzeln oder in Gruppen ein- und ausgeschaltet, dass in der Bildebene mehrere Beugungsordnungen gleichzeitig abgebildet werden und Maßnahmen zur Trennung der Beugungsordnungen nicht vorhanden sind. Die beiden Einzel-Detektoren **9.1** und **9.2** sind dabei auf einer Trägerplatte **12** angeordnet, die über einen Antrieb **11** verfügt, der von der Steuer- und Recheneinheit **8** gesteuert wird.

Dadurch die Verwendung von zwei Einzel-Detektoren **9.1** und **9.2** kann die zur Erfassung der Spektralbereiches notwendige Messzeit näherungsweise halbiert werden.

Bei dem erfindungsgemäßen Verfahren zur Messwerterfassung wird eine zu untersuchenden Probe von einer aus mindestens zwei Einzellichtquellen unterschiedlicher spektraler Charakteristik bestehenden Lichtquelle bestrahlt und das reflektierte oder durchgelassene Licht mit einem Gitterspektrometersystem, das aus einem Beugungsgitter, abbildenden optischen Elementen und einem in der Bildebene angeordneten Detektor besteht, gemessen. Die Einzellichtquellen werden dazu einzeln oder in Gruppen ein- und ausgeschaltet, ohne dass in der Bildebene mehreren Beugungsordnungen gleichzeitig abgebildet werden. Es können niemals alle Lichtquellen gleichzeitig eingeschaltet sein, da sich sonst mehrere Beugungsordnungen überlappen würden. In die Bildebene des Spektrometers werden mehrere Beugungsordnungen gleichzeitig abgebildet, ohne dass Maßnahmen zur Trennung der Beugungsordnungen vorhanden sind. Die eindeutige Zuordnung der gemessenen Lichtsignale zu einer Beugungsordnung erfolgt erfindungsgemäß dadurch, dass maximal eine der Lichtquellen eingeschaltet ist, die in irgend einer Beugungsordnung die selbe Stelle der Bildebene beleuchten.

Die Probe wird von drei LED mit Hilfe einer Fokussieroptik unter einem Winkel von ca. 45° beleuchtet und das von der Probe reflektiert Licht mit Hilfe der Abbildungsoptik auf einen Eingangsspalt und weiter über ein abbildendes holographisches Beugungsgitter auf den, in der Bildebene angeordneten Detektor abgebildet. Dabei werden der Strom durch die LEDs oder deren Einschaltdauer so von einer Steuer- und Recheneinheit gesteuert, das die Spektralbereiche etwa gleich hoch ausgesteuert werden.

Das erfindungsgemäße Verfahren zur Messwerterfassung bei Gitterspektrometersystemen kann in Abhängigkeit vom verwendeten Detektor sowohl für polychromatische als auch für monochromatische Spektrometeranordnung angewendet werden.

Zur Realisierung einer polychromatischen Spektrometeranordnung wird dazu ein Detektor verwendet, der aus mehreren einzelnen Detektorabschnitten besteht, so dass das abgebildete Spektrum bzw. die abgebildeten Beugungsordnungen auf einmal detektiert werden können. Dabei kann der Detektor als Zeilen- oder Matrixdetektor ausgebildet sein.

Das Gitterspektrometersystem hat einen Spektralbereich von 1590 bis 1920 nm in der 1. Beugungsordnung, 895 bis 960 nm in der 2. Beugungsordnung und 530 bis 640 nm in der 3. Beugungsordnung. Folglich liegt der 1. Bereich des interessierenden Spektralbereiches in der 3. Beugungsordnung und die beiden anderen Bereiche in der 2. Beugungsordnung.

Im folgenden wird die Messwerterfassung bei einer polychromatischen Spektrometeranordnung beschrieben. Dabei sollen Proben in bereits genannten drei interessanten Spektralbereichen untersucht werden:

| 1. | Bereich: | 530 bis 610 nm |
| 2. | Bereich: | 820 bis 850 nm |
| 3. | Bereich: | 940 bis 960 nm |

Die Lichtquelle besteht auch hierbei aus drei LED 7.1 bis 7.3, deren Maxima der spektralen Lichtleistung bei 570, 850 bzw. 940 nm liegen. Die Halbwertsbreite der spektralen Lichtleistung beträgt jeweils 40 nm und die Zehntelwertsbreite ca. 80 nm, so dass die interessierenden drei Spektralbereiche bei Verwendung einer LED jeweils mit mindestens 1/10 der maximalen Lichtleistung ausgestrahlt werden.

Die Messwerterfassung erfolgt im einzelnen folgendermaßen: Von der Steuerund Recheneinheit werden zunächst alle LEDs (7.1 bis 7.3) ausgeschalten. Die in diesem Zustand ausgelesenen Werte der Detektorzeile werden als sogenannte Dunkelsignalwerte gespeichert. Danach werden die LEDs 7.1 und 7.2 eingeschaltet. Das ist möglich, da die zu untersuchenden Spektralbereiche nebeneinander auf der Detektorfläche abgebildet werden und sich nicht überlappen (Produkt aus Beugungsordnung m und Wellenlänge $\lambda$ sind: $m \cdot \lambda$ = 1590 bis 1830 nm bzw. $m \cdot \lambda$ = 1880 bis 1920 nm). Der Strom durch die LEDs oder deren Einschaltdauer werden so gesteuert, das beide Spektralbereiche etwa gleich hoch ausgesteuert werden. Von den im beleuchteten Zustand ausgelesenen Werte (Bruttosignalwerte) der Detektorzeile werden die zuvor gespeicherten Dunkelsignalwerte abgezogen. Es ergeben sich die sogenannten Nettosignalwerte, die proportional der vom Detektorabschnitt (Pixel) empfangenen Lichtenergie sind. Im Anschluss daran werden die LEDs 7.2 und 7.3 eingeschaltet. Das ist möglich, da beide Spektralbereiche in der selben Beugungsordnung (m = 2) liegen. Der Strom durch die LEDs oder deren Einschaltdauer werden wiederum so gesteuert, das beide Spektralbereiche etwa gleich hoch ausgesteuert werden. Auch hier werden die Nettosignalwerte wie oben beschrieben berechnet.

Das zweimalige Einschalten Leuchtdiode LED 7.2 hat den Vorteil, dass die Nettosignalwerte beider Messungen gemittelt werden können, so dass sich das Rauschen vermindert. Das ist wichtig, da die Empfindlichkeit des Si-Photodetektors am langwelligen Ende Spektralbereiches stark abfällt. Das damit verbunden geringere Signal-Rausch-Verhältnis wird durch die Signalmittelung zumindest teilweise kompensiert.

Werden zur Ausleuchtung eines interessierenden Spektralbereiches mehrere LEDs verwendet, so ist von der Steuer- und Recheneinheit zu gewährleisten, dass dies entsprechend gesteuert und gleichzeitig ein- und ausgeschaltet werden. Außerdem sollten der Strom durch die LEDs oder deren Einschaltdauer so gesteuert werden, das die Spektralbereiche etwa gleich hoch ausgesteuert sind.

Bei der polychromatischen Spektrometeranordnung besteht der Detektor aus mehreren einzelnen Detektorabschnitten. Im vorliegenden Fall wurde eine Silizium-Photodioden-Zeile 9 (S8377-128Q von Hamamatsu) verwendet, die aus 128 einzelnen Detektorabschnitten (Pixeln) besteht. Es ist aber auch möglich einen Detektor mit zweidimensional aufgeteilten Detektorabschnitten (Matrixempfänger) zu verwenden. Hierbei werden die Signale der Pixel einer Spalte, auf die der selbe Spektralbereich abgebildet wird summiert. Dadurch ist es möglich Toleranzen der Spektrometeranordnung teilweise auszugleichen. Unter Umständen sind Matrixempfänger kostengünstiger als Zeilendetektoren.

Zur Realisierung einer monochromatischen Spektrometeranordnung werden hingegen ein oder mehrere Einzel-Detektoren verwendet, die gleichzeitig in der Bildebene bewegt werden.

Im folgenden wird die Messwerterfassung bei einer monochromatischen Spektrometeranordnung beschrieben, mit der Proben in den drei genannten interessanten Spektralbereichen untersucht werden sollen.

Bis auf den verwendeten Detektor wird die bereits beschriebene Anordnung verwendet.

Der Detektor wird von der Steuer- und Recheneinheit mit Hilfe des Antriebes zunächst auf den Anfang (kurzwelliges Ende) des Spektralbereiches positioniert ($m \cdot \lambda$ = 1590 nm). Die LEDs werden nach den folgenden **Tabelle 1** ein und ausgeschaltet, wobei die Nettosignalwerte wie bereits beschrieben aus den Brutto- und Dunkelsignalwerten berechnet werden. Die Schaltfolge für jeden Spektralbereich kann mehrmals ausgeführt werden, wobei die Messergebnisse gemittelt werden.

Zur Messung des nächsten Spektralbereiches wird der Detektor in Richtung längerer Wellenlängen verschoben, wobei die Verschiebung kontinuierlich oder schrittweise erfolgen kann.

**Tabelle 1**

| Bereich $m \cdot \lambda$ [nm] | Schaltfolge der LEDs bei einem Detektor |
|---|---|
| 1590 - 1640 | alle LEDs aus -> LED 7.1 an |
| 1640 - 1830 | alle LEDs aus -> LED 7.1 an -> LED 7.2 an |
| 1830 - 1880 | alle LEDs aus, keine Messung, Schnelldurchlauf |
| 1880 - 1920 | alle LEDs aus -> LED 7.3 an |

Während in den Bereich von 1590 -1640 nm nur die 3. Beugungsordnung der LED **7.1** fällt, wird in den Bereich von 1640 -1830 nm neben der 3. Beugungsordnung der LED **7.1** auch die 2. Beugungsordnung der LED **7.2** abgebildet.

In den Bereich von 1830 -1880 nm wird keine Beugungsordnung einer der LEDs abgebildet, so dass in diesem Bereich keine Messung erfolgen braucht. Dieser Bereich kann bei einer kontinuierlichen Verschiebung schneller durchlaufen bzw. bei einer schrittweisen Verschiebung mit höherer Schrittfrequenz durchlaufen werden.

In den Bereich von 1880 -1920 nm wird nur die 2. Beugungsordnung der LED **7.3** abgebildet.

In einer besonders vorteilhaften Ausgestaltung werden zur Realisierung einer monochromatischen Spektrometeranordnung zwei, gleichzeitig in der Bildebene bewegte Einzel-Detektoren verwendet werden, wobei der Abstand zwischen beiden Einzel-Detektoren vorzugsweise der halben Länge der Bildebene entspricht. Die beiden Einzel-Detektoren sind dazu auf einer Trägerplatte angeordnet.

Die auf einer gemeinsamen Trägerplatte fest angeordneten Einzel-Detektoren werden von der Steuer- und Recheneinheit mit Hilfe des Antriebes zunächst auf den Anfang ($m \cdot \lambda$ = 1590 nm) und die Mitte ($m \cdot \lambda$ = 1755 nm) des Spektralbereiches positioniert. Die LEDs werden nach der folgenden **Tabelle 2** ein und ausgeschaltet und die Nettosignalwerte entsprechend ermittelt. Auch hier kann die Schaltfolge in einer Position mehrmals ausgeführt werden, wobei die Messergebnisse gemittelt werden. Danach wird die Trägerplatte mit den Einzel-Detektoren in Richtung längerer Wellenlängen verschoben, wobei auch hier die Verschiebung kontinuierlich bzw. schrittweise erfolgen kann.

**Tabelle 2**

| Bereich m · λ [nm] | | Schaltfolge der LEDs bei zwei Detektoren |
|---|---|---|
| 1. Detektor | 2. Detektor | |
| 1590 - 1665 | 1755 - 1830 | alle LEDs aus -> LED 7.2 an -> LED 7.1 an |
| 1665 - 1715 | 1830 - 1880 | alle LEDs aus -> LED 7.1 an -> LED 7.2 an (keine Auswertung Detektor 2 erforderlich) |
| 1715 - 1755 | 1880 - 1920 | alle LEDs aus -> LED 7.1 und 7.3 an -> LED 7.2 und 7.3 an |

Während in den Bereich von 1590 -1665 nm die 2. Beugungsordnung der LED **7.2** fällt, wird gleichzeitig in den Bereich von 1755 -1830 nm die 3. Beugungsordnung der LED **7.1** abgebildet.

Im Gegensatz zur ersten Schaltfolge werden in der zweiten Schaltfolge sowohl die 2. Beugungsordnung der LED **7.2** als auch die 3. Beugungsordnung der LED **7.1** im Bereich von 1665 - 1715 nm auf dem ersten Detektor abgebildet. Eine Auswertung vom zweiten Detektor kann entfallen.

Im ersten Schritt der dritten Schaltfolge werden gleichzeitig in den Bereich von 1715-1755 nm die 3. Beugungsordnung der LED **7.1** und in den Bereich von 1880 -1920 nm die 2. Beugungsordnung der LED **7.3** abgebildet. Im zweiten Schritt dieser Schaltfolge werden gleichzeitig 3. Beugungsordnungen der LEDs **7.2** und **7.3** abgebildet.

Auch hier ist es vorteilhaft, für die LEDs **7.1** bis **7.3** mehrere Messwerte zu bestimmen und zu mitteln.

Da die LED **7.3** aufgrund seines abgestrahlten Spektrums bzw. dessen Maxima der spektralen Lichtleistung der größten Maximumwellenlänge von 940 nm die größte Temperaturabhängigkeit hat, kann die über die LED 7.3 gemessene Spannung zur Kompensation der Temperaturabhängigkeit genutzt werden. Dazu wird LED **7.1** von einer ersten Stromquelle und die in Reihe geschaltete LEDs **7.2** und **7.3** von einer zweiten Stromquelle gespeist. Die Spannung über der LED **7.3** wird gemessen und als Regelgröße zur Steuer- und Recheneinheit **8** zurückgeführt. Es ist aber auch möglich die Spannungen weiterer oder aller LEDs zu Kontrollzwecken zu messen oder die Messwerte in die Regelgröße einfließen zu lassen.

Der Spannungsabfall über den LEDs hängt zusätzlich von der LED-Sperrschicht-Temperatur ab. Zu dessen Berücksichtigung sind in der Steuerund Recheneinheit **8** die Signale der Nullprobe bei mindestens zwei extremen Temperaturen oder Parameter, die die Kurvenform beschreibende Parameter, wie beispielsweise Maximumwellenlänge und Halbwertsbreite mit den dazugehörigen LED-Spannungswerten, gespeichert.

Das Signal der Nullprobe bei der momentanen Temperatur wird mit Hilfe der momentanen LED-Spannung z. B. durch lineare Interpolation berechnet.

Das so korrigierte Signale der Nullprobe wird zur Berechnung der optischen Dichte der Probe verwendet. Damit entfällt die Notwendigkeit die Nullprobe bei jeder Änderung der Betriebstemperatur der LED neu zu bestimmen. Eine Vorrichtung zum Einschwenken der Nullprobe in den Strahlengang kann somit entfallen. Die Spannung weiterer LEDs kann zur Kompensation von deren Spannungsabhängigkeit verwendet werden.

Im Folgenden wird eine weitere Möglichkeit zur Temperaturkorrektur der Messwerte beschrieben:

Unter der Voraussetzung, dass die Kurvenform der spektralen Lichtleistung der LEDs $P_i (\lambda - \lambda_i)$ annähernd temperatur- und exemplarunabhängig sind, braucht hierbei das Signal der Nullprobe bei nur einer Temperatur gemessen zu werden. Die Kurvenformen $P_i (\lambda - \lambda i)$ werden einmalig anhand weniger LEDs ermittelt und dann für alle Geräte der Serie verwendet.

Die optische Dichte der Probe wird korrigiert, in dem sie um den folgenden Wert erhöht wird. Summiert wird dabei über alle gleichzeitig eingeschalteten LEDs.

$$k(\lambda) = \frac{\sum_i \frac{U_i - U0_i}{D_i} \cdot [C_i \cdot P_i(\lambda - \lambda_i) - A_i \cdot P_i'(\lambda - \lambda_i)]}{\ln(10) \cdot \sum_i P_i(\lambda - \lambda_i)}$$

Wobei:

$\lambda_i$      der Wellenlänge der maximalen spektralen Lichtleistung der i-ten LED

$A_i$      der Temperaturkoeffizient der Maximumwellenlängen $\lambda_i$ der i-ten LED

$P_i'$ die Ableitungen der spektralen Lichtleistung nach der Wellenlänge der i-ten LED

$U_i$ die während der Probenmessung ermittelte Flussspannung der i-ten LED

$U0_i$ die während der Nollprobenmessung ermittelte Flussspannung der i-ten LED

$C_i$ der Temperaturkoeffizient der Lichtleistung der i-ten LED der i-ten LED und

$D_i$ der Temperaturkoeffizient der Flussspannung der i-ten LED entspricht.

Mit dem erfindungsgemäßen Gitterspektrometersystem und dem Verfahren zur Messwerterfassung wurde eine Lösung vorgeschlagen, die die Nachteile der im Stand der Technik bekannten Lösungen behebt und bei der die Beleuchtung und der Detektor optimal aufeinander abgestimmt sind. Die Lösung ist bei einer kleinen Bauform einfach und kostengünstig zu fertigen. Dabei kann die zur Erfassung der Spektralbereiche notwendige Messzeit verringert werden, ohne dass teure, großflächige Detektorfläche, die insbesondere für die NIR- oder IR-Spektroskopie sehr kostenintensiv sind, erforderlich sind.

Durch die Ausnutzung mehrere Beugungsordnungen kann die Auflösung bei gleichbleibender Detektorgröße wesentlich vergrößert, oder die Detektorfläche bei gleicher Abbildungsqualität und Lichtleitwert verkleinert werden.

**Patentansprüche**

1. Gitterspektrometersystem, bestehend aus einer Lichtquelle zur Beleuchtung der zu untersuchenden Probe (6), einem Beugungsgitter (1), abbildenden optischen Elementen, einem in der Bildebene angeordneten Detektor und einer Steuer- und Regeleinheit (8), bei dem die Lichtquelle aus mindestens zwei Einzellichtquellen unterschiedlicher spektraler Charakteristik besteht, deren Spektralbereich mehrere Beugungsordnungen in der Bildebene überstreicht, wobei von der Steuer- und Regeleinheit (8) die Einzellichtquellen einzeln oder in Gruppen eingeschaltet werden, die in irgend einer Beugungsordnung nicht die selbe Stelle des in der Bildebene angeordneten Detektors beleuchten.

2. Gitterspektrometersystem nach Anspruch 1, bei dem das Beugungsgitter so ausgebildet ist, dass weitere abbildende optische Elemente entfallen.

3. Gitterspektrometersystem nach Anspruch 3, bei dem der Detektor zur Realisierung einer polychromatischen Spektrometeranordnung als Zeilen- oder Matrixdetektor (9) ausgebildet ist.

4. Gitterspektrometersystem nach mindestens einem der Ansprüche 1 und 2, bei dem zur Realisierung einer monochromatischen Spektrometeranordnung ein oder mehrere Einzel-Detektoren (9.1, 9.2) verwendet werden, die gleichzeitig in der Bildebene bewegt werden.

5. Gitterspektrometersystem nach Anspruch 5, bei dem in der monochromatischen Spektrometeranordnung zwei, gleichzeitig in der Bildebene bewegte Einzel-Detektoren (9.1, 9.2) verwendet werden, wobei der Abstand zwischen beiden Einzel-Detektoren (9.1, 9.2) vorzugsweise der halben Länge der Bildebene entspricht.

6. Gitterspektrometersystem nach mindestens einem der vorgenannten Ansprüche, bei dem als Einzellichtquellen (7.1, 7.2, 7.3) spektral unterschiedlich strahlende LED's Verwendung finden.

7. Verfahren zur Messwerterfassung bei einem, aus einer Lichtquelle zur Beleuchtung der zu untersuchenden Probe (6), einem Beugungsgitter (1), abbildenden optischen Elementen und einem in der Bildebene angeordneten Detektor bestehenden, Gitterspektrometersystem, bei dem eine Probe (6) von einer aus mindestens zwei Einzellichtquellen unterschiedlicher spektraler Charakteristik bestehenden Lichtquelle, deren Spektralbereich mehrere Beugungsordnungen in der Bildebene überstreicht, bestrahlt wird, und das von der Probe (6) reflektierte Licht der Einzellichtquellen vom Beugungsgitter (1) aufgespalten und auf dem in der Bildebene angeordneten Detektor in mehreren Beugungsordnungen abgebildet werden, wobei von der Steuer- und Regeleinheit (8) die Einzellichtquellen einzeln oder in Gruppen eingeschaltet werden, die in irgend einer Beugungsordnung nicht die selbe Stelle des Detektors beleuchten.

8. Verfahren nach Anspruch 9, bei dem das Beugungsgitter (1) so ausgebildet sein kann, dass weitere abbildende optische Elemente entfallen können.

9. Verfahren nach Anspruch 11, bei dem der Detektor zur Realisierung einer polychromatischen Spektrometeranordnung als Zeilen- oder Matrixdetektor (9) ausgebildet ist.

10. Verfahren nach mindestens einem der Ansprüche 9 und10, bei dem zur Realisierung einer monochromatischen Spektrometeranordnung ein oder mehrere Einzel-Detektoren (9.1, 9.2) verwendet werden, die gleichzeitig in der Bildebene bewegt werden.

11. Verfahren nach Anspruch 13, bei dem in der monochromatischen Spektrometeranordnung zwei, gleichzeitig in der Bildebene bewegte Einzel-Detektoren (9.1, 9.2) verwendet werden, wobei der Abstand zwischen den beiden Einzel-Detektoren (9.1, 9.2) vorzugsweise der halben Länge der Bildebene entspricht.

12. Verfahren nach mindestens einem der Ansprüche 9 bis 15, bei dem als Einzellichtquellen spektral unterschiedlich strahlende LED's (7.1,7.2,7.3) Verwendung finden.

Figur 1

3

2

5

4

6

1

9

8

7.1 bis 7.3

9.1

9.2

12

3

2

7.1 bis 7.3

5

4

6

8

11

**Figur 2**

**Europäisches Patentamt**

**EUROPÄISCHER RECHERCHENBERICHT**

Nummer der Anmeldung

EP 06 00 6507

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| D,X | DE 198 26 801 A1 (JETI TECHNISCHE INSTRUMENTE GMBH) 23. Dezember 1999 (1999-12-23) * Abbildung 1 * ----- | 1-12 | INV. G01J3/10 G01J3/18 G01J3/32 G01J3/36 |
| A | PATENT ABSTRACTS OF JAPAN Bd. 1998, Nr. 14, 31. Dezember 1998 (1998-12-31) -& JP 10 253451 A (HITACHI LTD), 25. September 1998 (1998-09-25) * Zusammenfassung; Abbildung 8 * ----- | 4,5,10, 11 | |
| D,A | US 2004/257563 A1 (MILLER HAROLD E ET AL) 23. Dezember 2004 (2004-12-23) * Abbildung 2 * ----- | 1-12 | |
| D,A | US 5 139 335 A (LUNDEEN ET AL) 18. August 1992 (1992-08-18) * Abbildung 1 * ----- | 1-12 | |

RECHERCHIERTE SACHGEBIETE (IPC)

G01J

Der vorliegende Recherchenbericht wurde für alle Patentansprüche erstellt

| Recherchenort | Abschlußdatum der Recherche | Prüfer |
|---|---|---|
| München | 18. Mai 2006 | Rödig, C |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 06 00 6507

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

18-05-2006

| Im Recherchenbericht angeführtes Patentdokument | Datum der Veröffentlichung | Mitglied(er) der Patentfamilie | Datum der Veröffentlichung |
|---|---|---|---|
| DE 19826801 A1 | 23-12-1999 | KEINE | |
| JP 10253451 A | 25-09-1998 | KEINE | |
| US 2004257563 A1 | 23-12-2004 | KEINE | |
| US 5139335 A | 18-08-1992 | KEINE | |

EPO FORM P0461

Für nähere Einzelheiten zu diesem Anhang : siehe Amtsblatt des Europäischen Patentamts, Nr.12/82

# EP 1 726 930 A1

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4038638 A1
- WO 9735178 A1
- DE 19826801 A1
- US 5477322 A
- US 20040257563 A1
- US 5139335 A
- DE 3516183 A1